# EUROPÄISCHE PATENTSCHRIFT

(11) **EP 3 538 776 B1**
(45) Veröffentlichungstag und Bekanntmachung des Hinweises auf die Patenterteilung: **24.03.2021**
(21) Anmeldenummer: 17791026.2
(22) Anmeldetag: 19.10.2017
(51) Int. Cl.: F16B 35/00, B60Q 1/068

(54) **SCHEINWERFER MIT EINEM GEHÄUSE UND EINER STELLSCHRAUBE**
HEADLAMP WITH A HOUSING AND A SET SCREW
PHARE AVEC UN BOITIER ET UNE VIS DE REGLAGE

(30) Priorität: 11.11.2016 DE 102016222195
(43) Veröffentlichungstag der Anmeldung: 18.09.2019
(73) Patentinhaber: EJOT GmbH & Co. KG, 57319 Bad Berleburg (DE)
(72) Erfinder: LAUBER, Marcus, 57319 Bad Berleburg (DE); PETER, Ralf, 57319 Bad Berleburg (DE); HENTSCHEL, Andreas, 42551 Velbert (DE)
(74) Vertreter: Hohgardt, Martin
(86) Internationale Anmeldenummer: PCT/EP2017/076699
(87) Internationale Veröffentlichungsnummer: WO 2018/086839

(56) Entgegenhaltungen:
- US-A- 3 430 996
- US-A- 5 351 170
- US-A- 5 444 603
- US-A1- 2016 076 757
- US-B1- 6 315 439

## Beschreibung

Die vorliegende Erfindung betrifft einen Scheinwerfer mit einem Gehäuse und mit einer Stellschraube zur Einstellung einer Position des Scheinwerfers.

Damit der Lichtkegel eines Scheinwerfers eines Kraftfahrzeugs im richtigen Winkel die Straße ausleuchtet, weisen die Scheinwerfer einen Verstellmechanismus auf. Mit diesem Verstellmechanismus kann der Lichtkegel des Scheinwerfers entweder manuell oder automatisch relativ zum Kraftfahrzeug verstellt werden.

Ein wesentliches Teil des Verstellmechanismus ist die sogenannte Stellschraube. Die Stellschraube ist derart ausgestaltet, dass sie von einem Antriebsmechanismus gedreht werden kann. Außerdem weist die Stellschraube ein Profil, vorzugsweise in Form eines Gewindes auf. Durch eine Drehung der Stellschraube kann über das Profil eine an der Stellschraube angeordnete Einstellvorrichtung axial entlang der Stellschraube bewegt werden. Diese Einstellvorrichtung ist wiederum derart mit dem Scheinwerfer verbunden, dass sich in Abhängigkeit von der Bewegung der Einstellvorrichtung die Ausrichtung des Lichtkegels des Scheinwerfers verändert. US 5,351,170 beschreibt einen Verstellmechanismus, bei dem die Stellschraube mit Hilfe einer Buchse fixiert wird.

Der Verstellmechanismus sollte günstig in der Herstellung, einfach in der Montage und verlässlich im Betrieb sein. Darüber hinaus soll der Verstellmechanismus universell einsetzbar sein, d.h. in einer Vielzahl verschiedener Kraftfahrzeuge für unterschiedliche Arten von Scheinwerfern.

Der Erfindung liegt die Aufgabe zugrunde einen Scheinwerfer bereitzustellen, mit denen ein derartiger Verstellmechanismus realisiert werden kann.

Diese Aufgabe wird durch den Gegenstand des unabhängigen Anspruchs gelöst. Bevorzugte Ausführungsformen ergeben sich aus den Unteransprüchen.

Die Erfindung umfasst einen Scheinwerfer mit einem Gehäuse und mit einer Stellschraube zur Einstellung einer Position des Scheinwerfers. Die Stellschraube weist zwei Elemente auf, ein Schraubelement und ein Gegenelement. Das Schraubelement weist an einem Ende einen größeren Durchmesser und an dem anderen Ende einen geringeren Durchmesser auf. Das Gegenelement weist mindestens einen Bereich mit einem größeren Durchmesser auf. Das Schraubelement und das Gegenelement sind ausgestaltet, um miteinander verbunden zu werden. Insbesondere das Ende des Schraubelements mit dem geringeren Durchmesser ist ausgestaltet, um mit dem Gegenelement verbunden zu werden. Das Schraubelement weist außerdem in einem Bereich mit geringerem Durchmesser ein Profil auf. Dieses Profil ist vorzugsweise auf der Außenseite, d.h. der Umfangfläche des Schraubelements angeordnet. Dieses Profil ist vorzugsweise derart ausgestaltet, dass eine Drehung der Stellschraube zu einer axialen Bewegung einer an der Stellschraube angeordneten Einstellvorrichtung führt.

Eine derartige Stellschraube kann auf einfache Weise in einem Gehäuse eines Scheinwerfers montiert werden. Außerdem ermöglicht sie, dass beide Enden der Stellschraube von außerhalb des Gehäuses zugänglich sind und die Stellschraube somit von beiden Enden aus gedreht werden kann.

Das Schraubelement und das Gegenelement werden im Folgenden auch als die Elemente bezeichnet. Erfindungsgemäß weisen die Elemente Enden und Bereiche auf, die geringere oder größere Durchmesser aufweisen. Grundsätzlich unterscheiden sich diese Enden und Bereiche dadurch, dass ein größerer Durchmesser eines Elements größer ist als der geringere Durchmesser des gleichen Elements und dass der geringere Durchmesser eines Elements geringer ist als der größere Durchmesser ist des gleichen Elements. Insbesondere sind die Durchmesser derart ausgestaltet, dass die Stellschraube bestimmungsgemäß montiert werden kann. Bei der Montage werden Enden und Bereiche der Stellschraube durch Öffnungen in das Gehäuse eingeführt. Die Enden und Bereiche mit einem größeren Durchmesser sind derart ausgestaltet, dass sie grundsätzlich nicht durch die zugehörige Öffnung in das Gehäuse eingeführt werden können und somit außerhalb des Gehäuses angeordnet werden. Die Enden und Bereiche mit einem geringeren Durchmesser sind derart ausgestaltet, dass sie durch die zugehörigen Öffnungen in das Gehäuse eingeführt werden können und somit innerhalb des Gehäuses angeordnet werden. Im Rahmen der vorliegenden Erfindung bezeichnet ein Ende eines Elements einen Endbereich des Elements. Somit muss die Stelle bzw. der Bereich mit einem geringeren oder größeren Durchmesser nicht notwendigerweise an dem Endpunkt des Elements angeordnet sein, sondern kann auch von dem Endpunkt beabstandet sein.

Die Durchmesser der Enden bzw. Bereiche des Schraubelements und des Gegenelements und die Durchmesser der Öffnungen können unterschiedlich, teilweise unterschiedlich oder gleich sein. Beispielsweise können die Durchmesser der Öffnungen des Gehäuses im Wesentlichen gleich sein. Genauso können die Bereiche und Enden mit größerem Durchmesser der Elemente im Wesentlichen den gleichen Durchmesser haben und die Bereiche und Enden mit geringerem Durchmesser der Elemente können auch im Wesentlichen gleiche Durchmesser haben. Die Durchmesser können aber auch unterschiedlich sein. Wenn zum Beispiel die Öffnung an dem Gegenelement wesentlich kleiner ist als die Öffnung an dem Schraubelement, kann der größere Durchmesser des Gegenelements kleiner sein als der Durchmesser des Schraubelements in dem Bereich mit dem Profil.

Im Rahmen der vorliegenden Erfindung wird die Dicke der Elemente und die Größe der Öffnungen mit Durchmessern beschrieben, weil die Elemente im Allgemeinen einen kreisförmigen Querschnitt aufweisen. Dies ist aber nicht notwendigerweise der Fall. So können das Schraubelement und das Gegenelement zumindest Bereiche aufweisen, die keinen kreisförmigen Querschnitt haben. Beispielsweise können die Enden mit einem größeren Durchmesser einen viereckigen, sechseckigen oder anders gestalteten Querschnitt aufweisen.

Das Schraubelement und das Gegenelement sind erfindungsgemäß derart ausgestaltet, dass sie miteinander verbunden werden können. Hierbei handelt es sich vorzugsweise um eine Verbindung, deren Integrität durch das Drehen von einem oder von beiden Elementen nicht beeinflusst wird. Damit das Verbinden der beiden Elemente in dem Gehäuse, d.h. die Montage der Stellschraube möglichst einfach durchgeführt werden kann, handelt es sich hierbei vorzugsweise um eine Klemmverbindung bzw. Rastverbindung. Hierfür kann eines der beiden Elemente einen Vorsprung aufweisen, der in eine Ausnehmung des anderen Elements eingeführt werden kann.

Erfindungsgemäß weist die Stellschraube im montierten Zustand außerhalb des Gehäuses mindestens zwei Bereiche bzw. Enden mit einem größeren Durchmesser auf und innerhalb des Gehäuses mindestens einen Bereich mit einem geringeren Durchmesser und mit einem Profil auf. Um dies zu erreichen, kann das Ende des Schraubelements mit geringerem Durchmesser derart ausgestaltet sein, dass es bei der Montage durch eine Öffnung in das Gehäuse eingeführt und durch die andere Öffnung zumindest teilweise wieder aus dem Gehäuse herausgeführt werden kann. Hier kann es dann mit dem Gegenelement verbunden werden. Das Schraubelement und das Gegenelement können aber auch jeweils ein Ende mit einem geringeren Durchmesser aufweisen und diese beiden Enden können bei der Montage jeweils durch die zugehörige Öffnung in das Gehäuse eingeführt werden. Hier können das Schraubelement und das Gegenelement dann miteinander verbunden werden. Grundsätzlich kann aber die Verbindung auch derart hergestellt werden, dass ein Ende des Gegenelements in das Gehäuse eingeführt wird und ein Ende des Schraubelements aus dem Gehäuse herausgeführt wird. Das Schraubelement und das Gegenelement können also innerhalb des Gehäuses und/oder außerhalb des Gehäuses miteinander verbunden werden. In einer Ausführungsform sind das Schraubelement und das Gegenelement lösbar miteinander verbunden.

In einer bevorzugten Ausführungsform der vorliegenden Erfindung sind die beiden Elemente drehfest miteinander verbunden, d.h. wenn eines der Elemente gedreht wird, dreht sich auch das andere Element. Dadurch kann das Profil auf dem Schraubelement sowohl durch eine Bewegung am Schraubelement als auch durch eine Bewegung am Gegenelement gedreht werden.

Erfindungsgemäß weist mindestens eines der Elemente eine Antriebsgeometrie auf. Wie oben erläutert, soll sich nach der Montage jeweils ein Ende bzw. ein Bereich der Elemente außerhalb des Gehäuses befinden. Dies ist ein Ende bzw. Bereich mit einem größeren Durchmesser. Die Antriebsgeometrie befindet sich vorzugsweise an so einem Ende bzw. in so einem Bereich. Dadurch kann von außerhalb des Gehäuses eine Drehung der Stellschraube und somit eine Bewegung des Scheinwerfers verursacht werden. Gemäß einer weiter bevorzugten Ausführungsform, weisen beide Elemente mindestens eine Antriebsgeometrie auf, wobei die Antriebsgeometrie vorzugsweise in den oben erläuterten Bereichen bzw. an diesen Enden angeordnet ist. Die Antriebsgeometrie ist erfindungsgemäß eine Kegelradverzahnung. Je mehr Antriebsgeometrien an den Enden angeordnet sind, desto mehr unterschiedliche Verstellmechanismen können mit der erfindungsgemäßen Stellschraube verwendet werden.

In einer weiter bevorzugten Ausführungsform der vorliegenden Erfindung ist die Stellschraube derart ausgestaltet, dass sie zumindest eine der Öffnungen in dem Gehäuse abdichtet. Dabei wird durch die Montage der Stellschraube mindestens eine der Öffnungen in dem Gehäuse derart geschlossen, dass bei bestimmungsgemäßer Benutzung durch die Öffnung keine Feuchtigkeit in das Gehäuse eindringt. Zu diesem Zweck weist mindestens eines der Elemente in dem Bereich, der im montierten Zustand in der Öffnung angeordnet ist, ein Dichtmittel auf. Dieser Bereich weist vorzugsweise einen geringeren Durchmesser auf, damit er in der Öffnung angeordnet werden kann. Der geringere Durchmesser in diesem Bereich kann aber größer sein, als der Durchmesser an dem Ende des Elements oder als der Durchmesser in dem Bereich mit Profil. Bei dem Dichtmittel kann es sich beispielsweise um eine umlaufende Gummidichtung handeln. Das Dichtmittel ist vorzugsweise zumindest teilweise in einer umlaufenden Nut in dem Element angeordnet. Im Rahmen der vorliegenden Erfindung kann ein Dichtmittel verwendet werden, das das Schraubelement und/oder das Gegenelement radial und/oder axial mit dem Gehäuse abdichtet.

In einer bevorzugten Ausführungsform der vorliegenden Erfindung weist die Stellschraube auch mindestens einen Anschlag auf. Der Anschlag ist ein Vorsprung auf der Stellschraube, der die axiale Bewegung einer Einstellvorrichtung auf der Stellschraube begrenzt. In einer weiter bevorzugten Ausführungsform weist die Stellschraube zwei Anschläge auf, um die Bewegung der Einstellvorrichtung in beide Richtungen begrenzen zu können.

In einer bevorzugten Ausführungsform weist die Stellschraube auch mindestens ein Federelement auf. Das Federelement sorgt für einen Toleranzausgleich in axialer Richtung zwischen einem Ende oder Bereich mit größerem Durchmesser und dem Gehäuse. Das Federelement kann als separates Bauteil ausgestaltet sein. Die Funktion des Federelements kann aber beispielsweise auch durch das Dichtmittel bereitgestellt werden.

Die Erfindung umfasst einen Scheinwerfer mit einem Gehäuse und einer Stellschraube. Das Gehäuse weist zwei Öffnungen auf durch die sich die Stellschraube erstreckt. Die Stellschraube weist ein Schraubelement und ein Gegenelement auf und im montierten Zustand befinden sich die größeren Durchmesser des Schraubelements und des Gegenelements jeweils außerhalb des Gehäuses. Der Bereich des Schraubelements mit dem Profil befindet sich innerhalb des Gehäuses.

Die Erfindung wird nachfolgend anhand eines in den beigefügten Zeichnungen dargestellten Ausführungsbeispiel näher erläutert. Aus dem beschriebenen Ausführungsbeispiel ergeben sich weitere Einzelheiten, Merkmale und Vorteile des Gegenstands der Erfindung. Es zeigen:
- Fig. 1: einen Vertikalschnitt durch eine Ausführungsform der Stellschraube, zu einem Zeitpunkt, wenn das Schraubelement und das Gegenelement noch nicht verbunden wurden;
- Fig. 2: die in Fig. 1 gezeigte Ausführungsform der Stellschraube vor der Montage in die Öffnungen eines Gehäuses;
- Fig. 3: die in Fig. 1 gezeigte Ausführungsform der Stellschraube im montierten Zustand; und
- Fig. 4a und 4b: eine alternative Ausführungsform der Stellschraube.

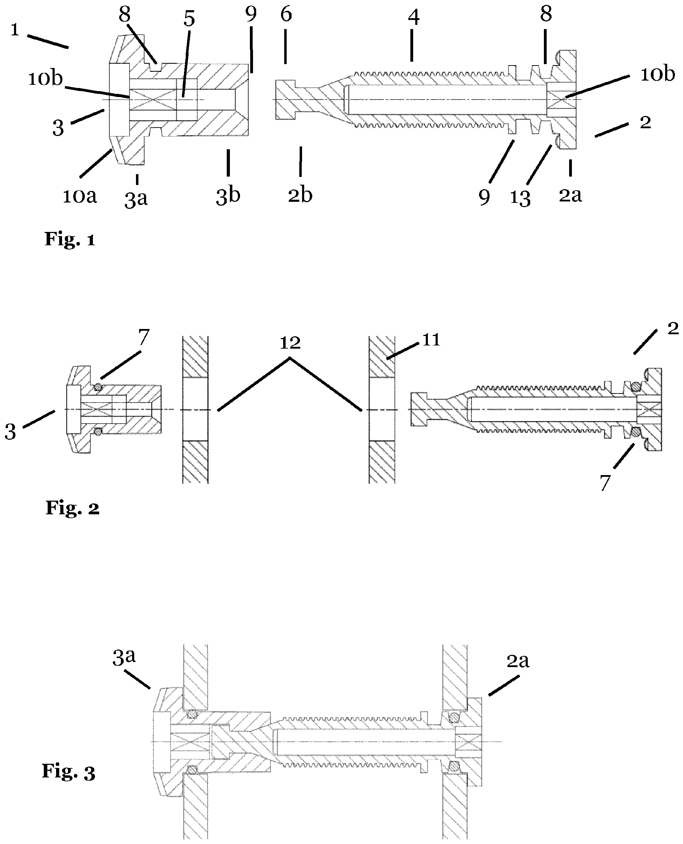

Figur 1 zeigt einen Vertikalschnitt durch die Stellschraube 1. Die Stellschraube 1 weist zwei Elemente auf, das Schraubelement 2 und das Gegenelement 3. Es ist dem Fachmann bewusst, dass die Stellschraube 1 darüber hinaus noch weitere Elemente aufweisen kann. Insbesondere müssen die hier an den Elementen 2, 3 ausgestalteten Merkmale nicht notwendigerweise einstückig an den Elementen 2, 3 angeordnet sein, sondern können auch durch weitere Elemente realisiert werden.

Das Schraubelement 2 weist zwei Enden auf. Es gibt in dieser Ausführungsform ein Ende 2a mit einem größeren Durchmesser und ein Ende 2b mit einem geringeren Durchmesser. Das Ende 2a mit dem größeren Durchmesser hat einen Durchmesser, der größer ist als die Öffnung eines Gehäuses eines Scheinwerfers in der das Schraubelement 2 montiert werden soll, so dass dieses Ende 2a bei der Montage außerhalb des Gehäuses verbleibt. Dabei bleibt dieses Ende 2a des Schraubelements 2 insbesondere derart außerhalb des Gehäuses, dass es von außerhalb des Gehäuses gedreht werden kann. Dem Fachmann ist bewusst, dass dies auf unterschiedliche Weisen erreicht werden kann. Insbesondere können dieses Ende 2a und die Öffnung in dem Gehäuse derart ausgestaltet sein, dass das Ende 2a vertieft in der Gehäusewand angeordnet ist und gegebenenfalls bündig mit der Außenseite der Gehäusewand abschließt.

Das Ende 2b mit dem geringeren Durchmesser hat einen Durchmesser der geringer ist, als die Öffnung des Gehäuses des Scheinwerfers in der das Schraubelement 2 montiert werden soll. Somit kann dieses Ende 2b des Schraubelements 2 bei der Montage in dem Gehäuse angeordnet werden. Das Schraubelement 2 weist auch einen Bereich mit einem geringeren Durchmesser auf an dem ein Profil 4 angeordnet ist. Durch den geringeren Durchmesser dieses Bereichs kann auch das Profil 4 innerhalb des Gehäuses angeordnet werden.

In der in Figur 1 gezeigten Ausführungsform hat das Gegenelement 3 einen Bereich mit einem größeren Durchmesser, der an einem Ende 3a des Gegenelements 3 angeordnet ist. Wie im Zusammenhang mit dem Schraubelement 2 erläutert, ist auch dieses Ende 3a des Gegenelements 3 ausgestaltet, um im montierten Zustand außerhalb des Gehäuses angeordnet zu sein. Darüber hinaus hat das Gegenelement 3 in dieser Ausführungsform ein weiteres Ende 3b mit einem geringeren Durchmesser, das ausgestaltet ist, um in dem Gehäuse angeordnet zu werden.

Im Rahmen der Erfindung sind das Schraubelement 2 und das Gegenelement 3 ausgestaltet, um miteinander verbunden zu werden. In der in Figur 1 gezeigten Ausführungsform weist das Gegenelement 3 hierfür eine Ausnehmung 5 auf und das Ende 2b des Schraubelements 2 einen entsprechenden Vorsprung 6. Die Ausnehmung 5 und der Vorsprung 6 sind derart ausgestaltet, dass die beiden Elemente 2, 3 durch Ineinanderschieben miteinander verbunden werden können. Damit sich diese Verbindung während der Nutzung der Stellschraube 1 nicht einfach lösen kann, erstreckt sich der Vorsprung 6 in der in Figur 1 gezeigten Ausführungsform quer zu der Längserstreckung des Schraubelements 2 und die Ausnehmung 5 weist eine entsprechende Hinterschneidung auf. Dem Fachmann ist aber bewusst, dass es viele verschiedene Möglichkeiten gibt, das Schraubelement 2 und das Gegenelement 3 einfach miteinander zu verbinden.

In Figur 1 weisen das Schraubelement 2 und das Gegenelement 3 auch Mittel auf, die bei der Abdichtung der Öffnungen im Gehäuse bei montierter Stellschraube 1 behilflich sind. Das Schraubelement 2 und das Gegenelement 3 weisen hier jeweils Nuten 8 auf, die derart angeordnet sind, dass sie sich im montierten Zustand im Wesentlichen in den Öffnungen befinden. In den Nuten 8 können beispielsweise umlaufende Gummidichtungen 7 angeordnet sein, wie dies in Figur 2 gezeigt ist. Diese umlaufenden Gummidichtungen 7 sind in der vorliegenden Ausführungsform an die Geometrie der Nuten angepasst.

Figur 1 zeigt darüber hinaus noch Beispiele für Anschläge 9, mit denen die Bewegung einer Einstellvorrichtung auf der Stellschraube 1 begrenzt werden kann.

Figur 1 zeigt darüber hinaus noch Beispiele, wie Antriebsgeometrien an dem Schraubelement 2 und an dem Gegenelement 3 angeordnet sein können. Das Gegenelement 3 weist in dieser Ausführungsform in dem Bereich mit größerem Durchmesser 3a eine Kegelverzahnung 10a auf. Darüber hinaus haben in dieser Ausführungsform das Schraubelement 2 und das Gegenelement 3 jeweils eine Ausnehmung 10b für einen Innensechskant.

In den Figuren 2 und 3 wird die Montage der in Figur 1 dargestellten Stellschraube 1 veranschaulicht. Daher werden in diesen Figuren die in Figur 1 eingeführten Bezugszeichen nicht wiederholt. Schraubelement 2 und das Gegenelement 3 werden jeweils durch eine zugehörige Öffnung 12 des Gehäuses 11 teilweise in das Gehäuse 11 geführt und dann in dem Gehäuse 11 miteinander verbunden. Im montierten Zustand befinden sich die Bereiche und Enden mit größerem Durchmesser 2a, 3a außerhalb des Gehäuses 11 und insbesondere der Bereich mit dem Profil 4 befindet sich innerhalb des Gehäuses 11. Außerdem sind im montierten Zustand die umlaufenden Gummidichtungen 7 im Bereich der Öffnungen 12 angeordnet.

Die Stellschraube kann für einen Toleranzausgleich innerhalb des Gehäuses ein oder mehrere Federelemente 13 aufweisen. In Figur 1 ist ein Federelement 13 beispielhaft an dem Ende mit einem größeren Durchmesser 2a des Schraubelements 2 angeordnet. Darüber hinaus kann ein Federelement 13 aber auch beispielsweise an dem Gegenelement 3 angeordnet sein.

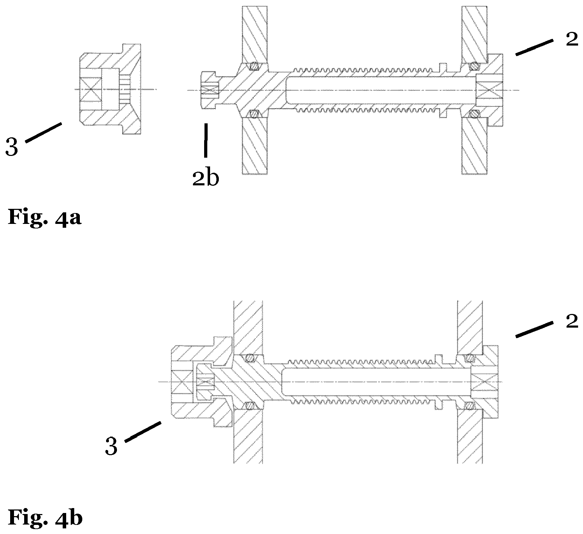

Die Figuren 4a und 4b veranschaulichen eine Ausführungsform, bei der das Gegenelement 3 kein Ende mit einem geringeren Durchmesser aufweist und das Schraubelement 2 derart ausgestaltet ist, dass das Ende 2b mit dem geringeren Durchmesser durch eine Öffnung in das Gehäuse gesteckt werden und durch die andere Öffnung wieder herausragen kann. Das Schraubelement 2 und das Gegenelement 3 werden dann derart montiert, dass das Ende 2b des Schraubelements mit geringerem Durchmesser durch das Gehäuse 11 hindurch gesteckt wird, so dass es an der anderen Öffnung aus dem Gehäuse herausragt. Dort wird das Ende 2b mit dem Gegenelement verbunden.

Es wird vom Fachmann verstanden werden, dass die gezeigten Ausführungsbeispiele nur beispielhaft sind und alle gezeigten Elemente, Mittel, und Merkmale verschieden ausgestaltet sein können, aber dennoch die hier beschriebenen Grundfunktionalitäten erfüllen können.

## Patentansprüche

1. Ein Scheinwerfer mit einem Gehäuse (11) und mit einer Stellschraube (1) zur Einstellung einer Position des Scheinwerfers,
wobei die Stellschraube aufweist:
ein Schraubelement (2) mit einem größeren Durchmesser an einem Ende (2a) und einem geringeren Durchmesser an einem anderen Ende (2b), und
ein Gegenelement (3) mit einem Bereich mit einem größeren Durchmesser (3a), wobei das Schraubelement (2) und das Gegenelement (3) derart ausgestaltet sind, dass das Ende (2b) des Schraubelements (2) mit geringerem Durchmesser mit dem Gegenelement (3) verbunden werden kann,
wobei das Schraubelement (2) in einem Bereich mit geringerem Durchmesser ein Profil (4) aufweist, und
wobei mindestens eines von dem Schraubelement (2) und dem Gegenelement (3) eine Antriebsgeometrie mit einer Kegelradverzahnung (10a) aufweist, und wobei das Gehäuse (11) zwei Öffnungen (12) aufweist durch die sich die miteinander verbundenen Schraubelement (2) und Gegenelement (3) derart erstrecken, dass sich die größeren Durchmesser (2a, 3a) jeweils außerhalb des Gehäuses (11) und sich der Bereich des Schraubelements (2) mit einem Profil (4) innerhalb des Gehäuses (11) befindet.

2. Der Scheinwerfer gemäß Anspruch 1, wobei eines von dem Schraubelement (2) und dem Gegenelement (3) eine Ausnehmung (5) und das andere einen Vorsprung (6) aufweist und wobei die Ausnehmung (5) und der Vorsprung (6) derart ausgestaltet sind, dass mit ihrer Hilfe das Schraubelement (2) und das Gegenelement (3) verbunden werden können.

3. Der Scheinwerfer gemäß einem der Ansprüche 1 oder 2, wobei das Schraubelement (2) und das Gegenelement (3) ausgestaltet sind, um drehfest miteinander verbunden zu werden.

4. Der Scheinwerfer gemäß einem der Ansprüche 1 bis 3, wobei mindestens eines von dem Schraubelement (2) und dem Gegenelement (3) ein Dichtmittel aufweist.

5. Der Scheinwerfer gemäß Anspruch 4, wobei das Dichtmittel eine umlaufende Gummidichtung (7) ist.

6. Der Scheinwerfer gemäß Anspruch 5, wobei die umlaufende Gummidichtung (7) in einer umlaufenden Nut (8) angeordnet ist.

7. Der Scheinwerfer gemäß einem der Ansprüche 1 bis 6, wobei das Profil (4) ein Gewinde bildet.

8. Der Scheinwerfer gemäß einem der Ansprüche 1 bis 7, wobei mindestens eines von dem Schraubelement (2) und dem Gegenelement (3) einen Anschlag (9) aufweist, der den Weg einer an dem Profil (4) des Schraubelements (2) angeordneten Einstellvorrichtung begrenzt.

9. Der Scheinwerfer gemäß einem der Ansprüche 1 bis 8, wobei die Stellschraube mindestens ein Federelement (13) aufweist.

## Claims

1. A headlight with a housing (11) and an adjusting screw (1) for adjusting a position of the headlamp,
wherein the adjusting screw comprises:
a screw element (2) comprises a larger diameter at one end (2a) and a smaller diameter at an other end (2b), and
a counter element (3) comprises an area with a larger diameter (3a),
wherein the screw element (2) and the counter element (3) are designed such that the end (2b) of the screw element (2) with a smaller diameter can be connected to the counter element (3),
wherein the screw element (2) has a profile (4) in an area with smaller diameter, and
wherein at least one of the screw element (2) and the counter element (3) comprises a drive geometry with bevel gear teeth (10a), and
wherein the housing (11) comprises two openings (12) through which the interconnected screw element (2) and counter element (3) extend in such a way that the larger diameters (2a, 3a) are each outside the housing (11) and the area of the screw element (2) with a profile (4) is inside the housing (11).

2. The headlamp according to claim 1, wherein one of the screw element (2) and the counter element (3) comprises a recess (5) and the other comprises a projection (6), and wherein the recess (5) and the projection (6) are configured such that by means of the recess (5) and the projection the screw element (2) and the counter element (3) can be connected.

3. The headlamp according to any one of claims 1 or 2, wherein the screw element (2) and the counter element (3) are configured to be connected to each other in a rotationally fixed manner.

4. The headlamp according to any one of claims 1 to 3, wherein at least one of the screw element (2) and the counter element (3) comprises a sealing means.

5. The headlamp according to claim 4, wherein the sealing means is a circumferential rubber seal (7).

6. The headlamp according to claim 5, wherein the circumferential rubber seal (7) is arranged in a circumferential groove (8).

7. The headlamp according to any one of claims 1 to 6, wherein the profile (4) forms a thread.

8. The headlamp according to any one of claims 1 to 7, wherein at least one of the screw element (2) and the counter element (3) comprises a stop (9) limiting the movement of an adjustment device arranged at the profile (4) of the screw element (2).

9. The headlamp according to any one of claims 1 to 8, wherein the adjusting screw comprises at least one spring element (13).

## Revendications

1. Un phare avec un boîtier (11) et avec une vis de réglage (1) pour le réglage d'une position du phare,
dans lequel la vis de réglage présente :
un élément de vis (2) avec un diamètre plus grand à une extrémité (2a) et un diamètre plus petit à une autre extrémité (2b), et
un élément antagoniste (3) avec une zone avec un diamètre plus grand (3a),
dans lequel l'élément de vis (2) et l'élément antagoniste (3) sont configurés de telle manière que l'extrémité (2b) de l'élément de vis (2) avec un diamètre plus petit puisse être reliée à l'élément antagoniste (3),
dans lequel l'élément de vis (2) présente un profil (4) dans une zone avec un diamètre plus petit, et
dans lequel au moins un parmi l'élément de vis (2) et l'élément antagoniste (3) présente une géométrie d'entraînement avec une denture de roue conique (10a), et
dans lequel le boîtier (11) présente deux ouvertures (12) à travers lesquelles l'élément de vis (2) et l'élément antagoniste (3) reliés entre eux s'étendent de telle manière que les diamètres plus grands (2a, 3a) se trouvent respectivement en dehors du boîtier (11) et la zone de l'élément de vis (2) avec un profil (4) se trouve à l'intérieur du boîtier (11).

2. Le phare selon la revendication 1, dans lequel un parmi l'élément de vis (2) et l'élément antagoniste (3) présente un évidement (5) et l'autre présente une saillie (6) et dans lequel l'évidement (5) et la saillie (6) sont configurés de telle manière qu'avec leur aide l'élément de vis (2) et l'élément antagoniste (3) puissent être reliés.

3. Le phare selon l'une des revendications 1 ou 2, dans lequel l'élément de vis (2) et l'élément antagoniste (3) sont configurés afin d'être reliés entre eux sans pouvoir tourner.

4. Le phare selon l'une des revendications 1 à 3, dans lequel au moins un parmi l'élément de vis (2) et l'élément antagoniste (3) présente un moyen étanche.

5. Le phare selon la revendication 4, dans lequel le moyen étanche est une garniture en caoutchouc (7) périphérique.

6. Le phare selon la revendication 5, dans lequel la garniture en caoutchouc (7) périphérique est agencée dans une rainure périphérique (8).

7. Le phare selon l'une des revendications 1 à 6, dans lequel le profil (4) forme un filet.

8. Le phare selon l'une des revendications 1 à 7, dans lequel au moins un parmi l'élément de vis (2) et l'élément antagoniste (3) présente une butée (9) qui délimite la voie d'un dispositif de réglage agencé au niveau du profil (4) de l'élément de vis (2).

9. Le phare selon l'une des revendications 1 à 8, dans lequel la vis de réglage présente au moins un élément de ressort (13).
